# EUROPEAN PATENT SPECIFICATION

(11) **EP 2 296 576 B1**
(45) Date of publication and mention of the grant of the patent: **13.03.2013**
(21) Application number: 09761738.5
(22) Date of filing: 10.06.2009
(51) Int. Cl.: A61C 7/00, A61C 8/00

(54) **INTRA-BONE SCREW FOR EXTRADENTAL ANCHORING AND METALLIC WIRE WITH MEANS FOR MUTUAL COUPLING, PARTICULARLY FOR ORTHODONTIC USE**
INTRAOSSÄRE SCHRAUBE ZUR EXTRADENTALEN VERANKERUNG UND METALLDRAHT MIT MITTELN ZUR GEGENSEITIGEN VERBINDUNG, INSBESONDER FÜR KIEFERORTHOPÄDISCHE ANWENDUNGEN
VIS INTRA-OSSEUSE POUR ANCRAGE EXTRA-DENTAIRE ET FIL MÉTALLIQUE COMPORTANT DES MOYENS DE COUPLAGE RÉCIPROQUE, DESTINÉS EN PARTICULIER À L'ORTHODONTIE

(30) Priority: 11.06.2008 IT BO20080370
(43) Date of publication of application: 23.03.2011
(73) Proprietor: Costa, Antonio, 43100 Parma (IT)
(72) Inventor: Costa, Antonio, 43100 Parma (IT)
(74) Representative: Modiano, Micaela Nadia
(86) International application number: PCT/EP2009/057170
(87) International publication number: WO 2009/150175

(56) References cited:
- WO-A-2007/125561

## Description

### Technical Field

The present invention relates to a system comprising an intra-bone screw for extradental anchoring and a metallic wire with mutual coupling means, particularly for orthodontic use.

### Background Art

Orthodontic braces are used to move the teeth inside the mouth by applying thereto one or more forces of suitable intensity.

It is known to use, in the orthodontic field, intra-bone screws that are designed to be screwed into the maxillary bones and have wires or springs of a known and commercially available type fixed to the portion that is designed to protrude from the gum: in order to fix the wires to the screw, such screw is provided, at its upper end, with notches, holes or the like which are oriented at right angles to the main axis and to which the orthodontic wires are fixed by means of composite resins that wrap around them and cement them or by means of elastic or metallic bindings.

Such bindings cause discomfort to the patient due to friction against tissues; other times, the wires, cemented by means of composite resins, create porous surfaces which cause an accumulation of bacterial plaque. Both of these connections cause inflammations to tissues either due to mechanical irritations or due to bacterial infection of the neighboring tissues.

Moreover, in the background art the wires are jointly connected to the screw with no degree of freedom and therefore can transmit to the screw also torsional stresses that tend to screw or unscrew such screw with respect to the seat that it has formed in the bone, causing its expulsion.

In practice, the rotational momenta discharged onto the screw are harmful for the survival of such screw within bone tissue, since they cause compression, ischemia and necrosis of the bone cells that surround the turns, with consequent mobility and loss of the screw.

Another drawback of the background art is the difficulty of creating, with the wire inserted in the notches provided on the head at right angles to the long axis of the screw, vectors that are parallel to the axis of such screw. In order to create these vectors, the wire must be bent adjacent to the notch through approximately 90°. With this configuration, the contact and insertion point of the wire on the head of the screw is too short to withstand the displacement and is difficult to stabilize; stabilization must necessarily occur by means of bindings or composite resins that cement the wire in the notches.

In document WO 2007/125561 A1, upon which prior art the two-part from of claim 1 is based, an intra-bone screw for extra-dental fixing is disclosed, that is provided with a wire bent to form a U-shaped terminal which is inserted for interlocking into a dead hole made into the head of the screw.

### Disclosure of the Invention

The aim of the present invention is to obviate the above-mentioned drawbacks and meet the mentioned requirements, by providing an intra-bone screw for extradental anchoring and a metallic wire with mutual coupling means, particularly for orthodontic use, with which there are no torsional stresses of the screw with respect to the bone in order to avoid the consequent expulsion phenomena, there is no need for bindings or resins to couple the wire to the screw, and coupling with a thin elastic wire is provided which is adapted to produce with clinical simplicity a correct force in a direction with an extent which are valid to also provide exclusive and intrusive vectors that until now were difficult to achieve.

Within this aim, an object of the present invention is to achieve the above-mentioned aim with a structure that is simple, relatively easy to provide in practice, safe in use, effective in operation, and of relatively low costs.

Another object of the invention is to insert the orthodontic wire coaxially with respect to the axis of the screw: if the wire is made of elastic metallic alloy and has a simple straight configuration, and if its elasticity is activated, the wire shall have its free end adapted to transmit a force that is parallel to the major axis of the screw and an orientation that is intrusive or extrusive with respect to the gum.

This aim and these and other objects, which will become better apparent hereinafter, are achieved by the present system, particularly for orthodontic use, according to the present invention that has the advantageous embodiments are disclosed in dependent claims 2-6.

### Brief description of the drawings

Further characteristics and advantages of the invention will become better apparent from the following detailed description of some preferred but not exclusive embodiments of an intra-bone screw for extradental anchoring with means for coupling to a metallic wire that protrudes from the oral mucosa, particularly for orthodontic use according to the invention, illustrated by way of non-limiting example in the accompanying drawings, wherein:

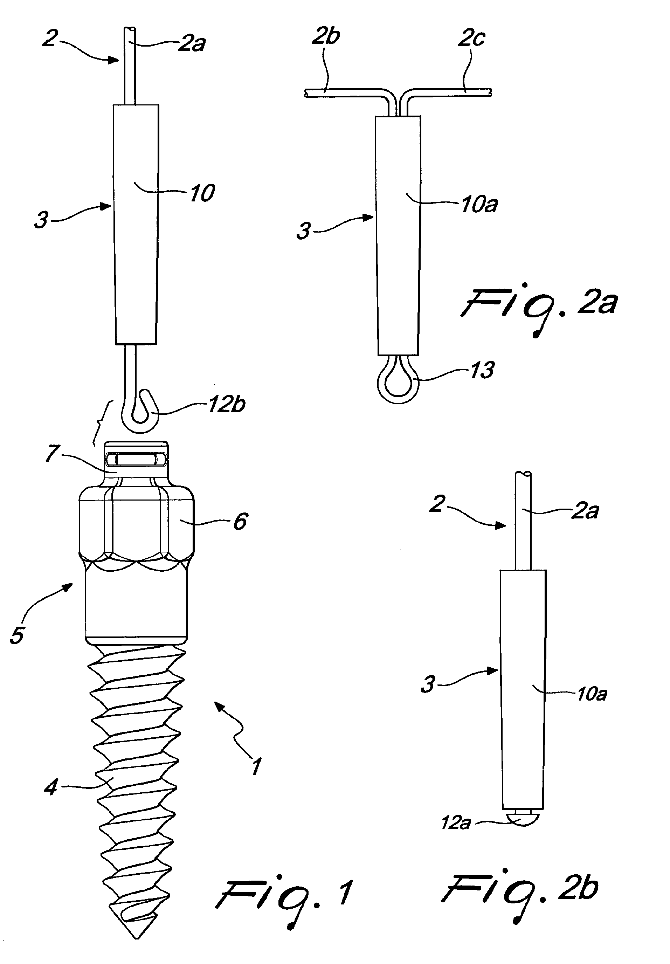

Figure 1 is an exploded side view of an intra-bone screw complete with a wire according to the invention, with means for coupling the wire to the screw;
Figures 2a, 2b are side views of wires with respective alternative means for coupling to the screw;
Figure 3 is a sectional side view, taken along an axial plane, of a screw including a corresponding wire;
Figures 4 and 5 are sectional side views of the wires with respective means for coupling to the screw which are alternative to the solution shown in Figure 3;
Figures 6, 7, 8 are side views of alternative versions of the top of the means for coupling the wire to the screw;

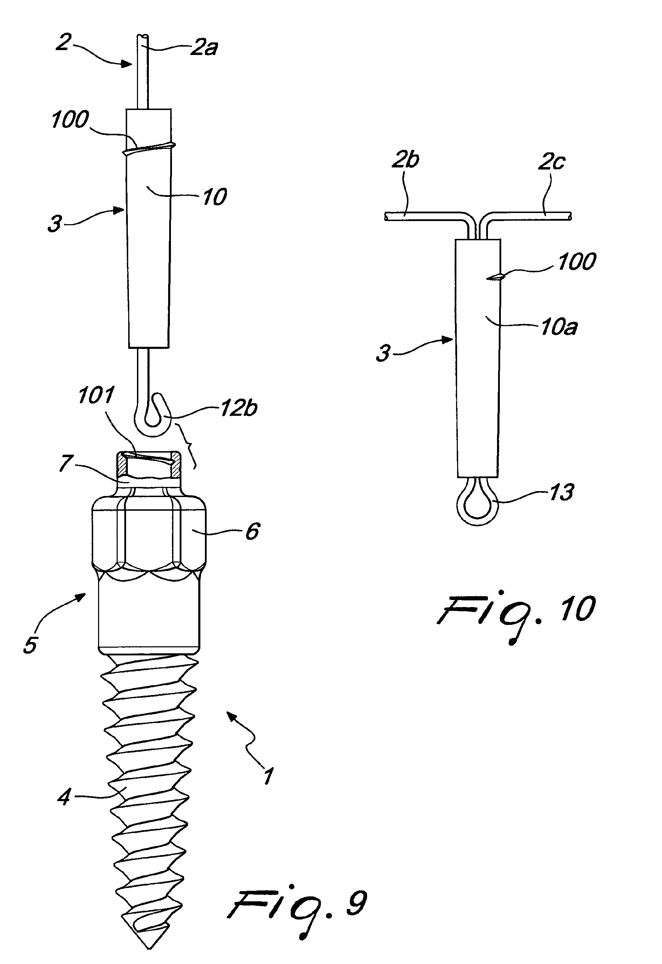

Figure 9 is an exploded side view of an intra-bone screw complete with the wire according to the invention with means for coupling the wire to the screw which are provided with safety locking elements;

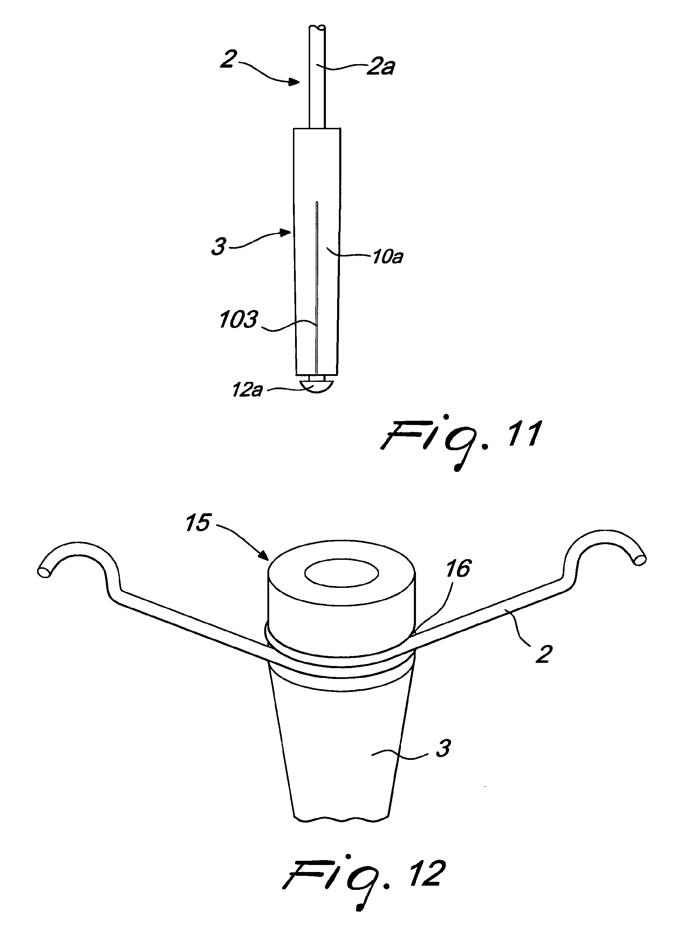

Figures 10, 11 are side views of wires with respective alternative means for coupling to the screw provided with safety locking elements;
Figure 12 is a perspective view of the means for coupling the wire to the screw, shown in Figure 8 in a particular coupling configuration;
Figure 13 is an exploded side view of an intra-bone screw complete with a wire according to the invention with means for coupling the wire to the screw which are provided with safety locking elements.

### Ways of carrying out the Invention

With reference to the figures, the reference numeral 1 generally designates an intra-bone screw for extradental anchoring, the reference numeral 2 designates a metallic wire designed to protrude from the oral mucosa, and the reference numeral 3 designates the respective mutual coupling means, particularly for orthodontic use according to the invention.

The screw 1 comprises a threaded and frustum-shaped portion 4 designed to be screwed into the bone of the gum and a portion 5 that remains outside the bone and can have advantageously a portion 6 that is prism-shaped with a cross-section that is for example hexagonal and is surmounted by a tubular part 7 that has a reduced diameter: a hole 8 of the tubular part 7 is extended within the screw with a dead portion 9.

The metallic wire 2 of the type used for orthodontic work can have different diameters and can be made of different materials: for example, the diameter of the wire can be comprised between 0.3 and 1.2 millimeters.

The dead portion 9 of the screw 1 can have, for example, a diameter comprised between 0.9 and 1.2 millimeters.

The means 3 for coupling the wire 2 to the screw 1 are constituted by a conical pin 10, with an axial hole 11 whose outer surface 10a is frustum-shaped and converges toward the blocked end of the dead portion 9 of the screw 1 within which it is designed to be forced in order to anchor itself jointly, by way of its external taper, to the walls of the hole 8 of the screw 1.

The axial hole 11 of the pin 10 must have such dimensions as to leave no less than one tenth of a millimeter of thickness at the tapered end of the pin 10.

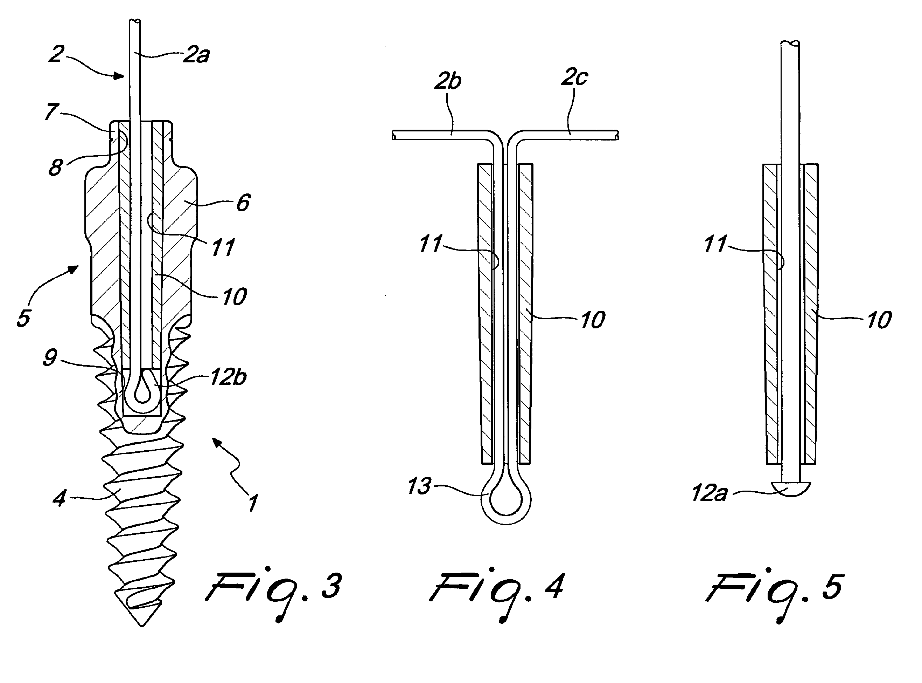

In order to prevent the wire 2 from sliding axially out of the conical pin 10, the end of the wire 2 has a larger tip that can be provided in various manners according to the requirements: the axial hole 11 can have a diameter that is substantially equal to the diameter of the wire 2, as shownn in Figure 5, and in this case the larger tip is constituted by a head 12a of the wire 2.

Figure 3 illustrates a pin 10 with an axial hole 11 whose diameter is slightly larger than twice the diameter of the wire 2: the end of the wire 2 is bent to provide a curl 12b whose outside dimensions are larger than the diameter of the axial hole 11 of the conical pin 10, in order to prevent axial extraction of the wire 2 from the pin 10 while allowing free rotation of the wire 2 about the axis of the screw 1.

Figure 4 illustrates a pin 10 whose axial hole 11 has a diameter that is slightly larger than twice the diameter of the wire 2; the wire 2 is substantially bent in a U-shape, with two arms 2b, 2c mutually close and forming a loop 13 that protrudes from the converging end of the pin 10.

The wire 2 can be made of elastic metallic alloy and if its elasticity is activated (especially for thinner wires), its free end or ends that protrude from the oral mucosa are each adapted to transmit a force that is parallel to the major axis of the screw 1 and has an intrusive or extrusive direction with respect to the gum, depending on the activation preloading to which it is subjected: in this case, the arms 2b, 2c of the wire 2 are bent substantially at 90° and are mutually opposite so as to arrange themselves substantially in mutual alignment.

The operation of the intra-bone screw according to the invention is as follows.

The forced coupling of the conical pin 10 in the dead portion 9 of the screw 1 that occurs without the aid or interposition of bindings or cementing resins with the end of the wire 2 provided with an enlarged tip which allows the wire 2 to rotate freely with respect to the axis of the screw 1 and prevent axial extraction of the wire 2 provides the wire 2 with freedom to rotate without transmitting moments that tend to screw or unscrew the screw 1: this reduces the possibilities of expulsion of the screw 1.

The adoption of thin wire 2, Figures 3 and 4, provides a portion 2a or two arms 2b, 2c of elastic wire that can be bent at 90° to produce with clinical simplicity a correct force whose direction and intensity are useful to provide also extrusive and intrusive vectors that up to now were difficult to achieve.

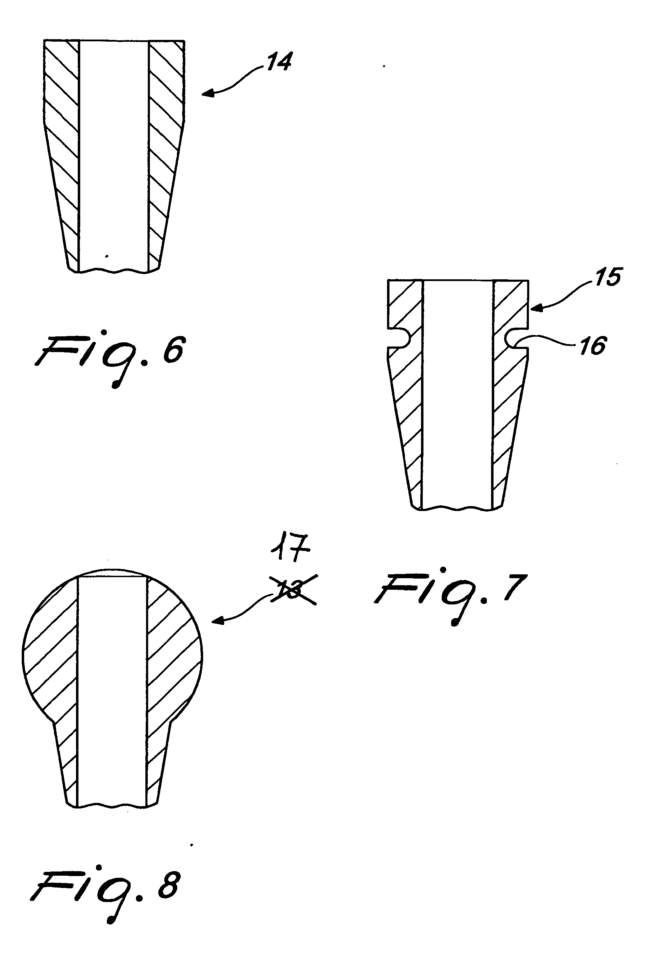

In order to increase the operating possibilities of the screw 1 according to the invention, it has been thought to provide the part of the conical pin 10 that protrudes from the screw 1 with a different shape or contour, for example a spheroidal shape 17, as shown in Figure 8, or a cylindrical one 14, as shown in Figure 6, or also a cylindrical one 15 with an external perimetric groove 16, as shown in Figure 7.

The length of the axially perforated conical pin 10 may be any and in particular may be short so as to enter only the end portion 9 of the hole 8 of the screw 1 or long in order to enter deeply, and the screw can be of the type in which the end of the head is provided or not with the tubular part 7 that has a reduced diameter.

It has thus been shown that the invention achieves the proposed aim and objects.

The invention thus conceived is susceptible of numerous modifications and variations, all of which are within the scope of the appended claims.

In particular, the possibility is noted to arrange the wire 2 around the head of the conical pin 10 so that it is engaged stably within an outer perimetric groove 16 and can rotate freely thereon (the wire 2 is in fact coiled around the pin 10 at the groove 16).

Likewise, the insertion of components or means 100 suitable for the assured locking of the pin 10 within the hole 8 of the screw 1 is not excluded: in this case, it will no longer be merely a matter of a conical coupling by forcing but an actual mating, in which the components or means 100 engage respective areas and/or optional seats 101 provided in the screw 1 so as to provide a sort of assurance in the mating of the parts, in order to avoid problems arising from poor positioning in case of a purely conical coupling between the pin 10 and the screw 1.

A similar result can be achieved with a longitudinal notch 103 of the pin 10 that produces a widening of such pin when the wire is pulled (the ends 12a, 12b and 13, forced toward the inlet of the hole 11 of the pin 10, will tend to widen the notch 103, consequently widening also the pin 10 and coupling it further with an interlock within the hole 8, 9).

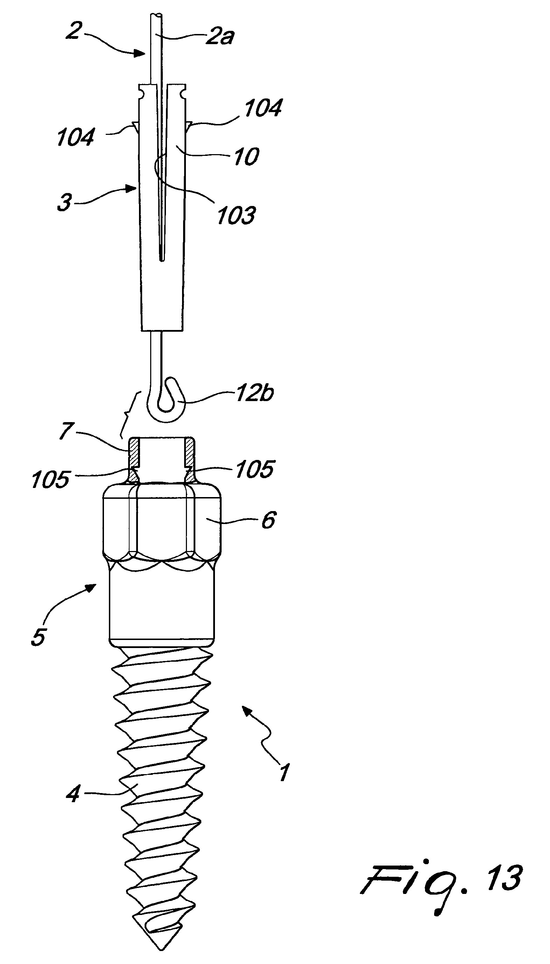

The possibility is not excluded, further, of providing an embodiment of the type shown in Figure 13, in which retention teeth 104 engage within corresponding seats of the axial hole 11 of the screw 1. In this case also, the pin 10 comprises a longitudinal notch 103 (in this case in an upper region) in order to allow easy elastic deformation thereof during insertion in the hole 8.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system, particularly for orthodontic use, comprising an intra-bone screw (1) for extradental anchoring, means (3) for coupling to the intra-bone screw (1) a metallic wire (2) that protrudes from the oral mucosa, and the metallic wire (2), said means (3) for coupling the metallic wire (2) to the screw (1) being adapted to allow the free rotation, but not the axial sliding, of the wire (2) with respect to the screw (1), in order to avoid transmission to the screw (1) of torques that hinder the healing process of the gum and at the same time allow the transmission of other forces with any orientation and axial offset, the head of the screw (1) being crossed axially by a dead hole (8, 9), **characterized in that** said wire (2) has a portion that is mounted so that it can rotate freely within an axial hole (11) of a conical pin (10) that is adapted to be forced into the hole (8, 9) of the screw (1), said wire (2) having a larger tip (12a, 12b, 13) that protrudes from said axial hole (11) of the converging end of said pin (10), a portion of the wire (2) that protrudes from the diverging end of said pin (10) being designed to be part of, or to be an anchoring point of, orthodontic or prosthetic elements.

2. The system according to claim 1, **characterized in that** said wire (2) has a diameter that is substantially equal to the diameter of the hole (11) of the conical pin (10), and **in that** the larger tip consists of a sort of head (12a) provided at the end of the wire (2).

3. The system according to claim 1, **characterized in that** said axial hole (11) of the conical pin (10) has a diameter that is slightly larger than twice the diameter of the wire (2) and **in that** the end of the wire (2) is bent so as to provide a curl (12b) that constitutes said larger tip.

4. The system according to claim 1, **characterized in that** said hole (11) of the conical pin (10) has a diameter that is slightly larger than twice the diameter of the wire (2) and **in that** said wire (2) is substantially bent into a U-shape, with mutually close arms (2b, 2c) that form a loop (13) that protrudes from the converging end of the pin (10).

5. The system according to one or more of the preceding claims, **characterized in that** said wire (2) is made of elastic metallic alloy and **in that** if its elasticity is activated, its free end (2a) or ends (2b, 2c) can transmit forces that are parallel to the major axis of the screw (1) and have an orientation that is intrusive or extrusive with respect to the gum.

6. The system according to one or more of the preceding claims, **characterized in that** the part of the pin (10) that protrudes from the screw (1) is spheroidal (17) or cylindrical (14) or cylindrical (15) with an outer perimetric groove (16).

## Patentansprüche

1. Ein System, insbesondere für kieferorthopädische Anwendungen, das Folgendes umfasst: eine intraossäre Schraube (1) zur extradentalen Verankerung, Mittel (3) zur Kopplung eines Metalldrahts (2), der aus der Mundschleimhaut herausragt, mit der intraossären Schraube (1) und den Metalldraht (2), wobei die Mittel (3) zur Kopplung des Metalldrahts (2) mit der Schraube (1) ausgebildet sind, um die freie Drehung, aber nicht das axiale Gleiten, des Drahts (2) im Verhältnis zur Schraube (1) zu ermöglichen, um die Übertragung von Drehmomenten, die den Heilungsprozess des Zahnfleischs behindern, auf die Schraube (1) zu vermeiden und um gleichzeitig die Übertragung anderer Kräfte mit beliebiger Ausrichtung und axialem Versatz zu ermöglichen, wobei der Kopf der Schraube (1) axial von einem Sackloch (8, 9) durchquert wird, **dadurch gekennzeichnet, dass** der Draht (2) einen Abschnitt hat, der so montiert ist, dass er sich frei in einer Axialbohrung (11) eines konischen Zapfens (10) drehen kann, der ausgebildet ist, um in das Loch (8, 9) der Schraube (1) gedrückt zu werden, wobei der Draht (2) eine größere Spitze (12a, 12b, 13) hat, die aus der Axialbohrung (11) des konvergierenden Endes des Zapfens (10) herausragt, wobei ein Abschnitt des Drahts (2), der aus dem divergierenden Ende des Zapfens (10) herausragt, konstruiert ist, um Teil von, oder ein Verankerungspunkt von, kieferorthopädischen oder prothetischen Elementen zu sein.

2. Das System gemäß Anspruch 1, **dadurch gekennzeichnet, dass** der Draht (2) einen Durchmesser hat, der im Wesentlichen gleich dem Durchmesser der Bohrung (11) des konischen Zapfens (10) ist, und dadurch, dass die größere Spitze in einer Art von Kopf (12a) besteht, der am Ende des Drahts (2) angebracht ist.

3. Das System gemäß Anspruch 1, **dadurch gekennzeichnet, dass** die Axialbohrung (11) des konischen Zapfens (10) einen Durchmesser hat, der etwas größer ist als der doppelte Durchmesser des Drahts (2), und dadurch, dass das Ende des Drahts (2) so gebogen ist, dass er eine Krümmung (12b) bildet, die die größere Spitze darstellt.

4. Das System gemäß Anspruch 1, **dadurch gekennzeichnet, dass** die Bohrung (11) des konischen zapfens (10) einen Durchmesser hat, der etwas größer ist als der doppelte Durchmesser des Drahts (2), und dadurch, dass der Draht (2) im Wesentlichen in eine 0-form gebogen ist, mit nah beieinander liegenden Armen (2b, 2c), die eine Schlaufe (13) bilden, welche aus dem konvergierenden Ende des Stifts (10) herausragt.

5. Das System gemäß einem oder mehreren der obigen Ansprüche, **dadurch gekennzeichnet, dass** der Draht (2) aus elastischer Metalllegierung hergestellt ist, und dadurch, dass, wenn seine Elastizität aktiviert wird, sein freies Ende (2a) oder seine freien Enden (2b, 2c) Kräfte übertragen können, die parallel zur Hauptachse der Schraube (1) sind und eine Ausrichtung haben, die intrusiv oder extrusiv zum Zahnfleisch ist.

6. Das System gemäß einem oder mehreren der obigen Ansprüche, **dadurch gekennzeichnet, dass** der Teil des Zapfens (10), der aus der Schraube (1) herausragt, kugelartig (17) oder zylindrisch (14) oder zylindrisch (15) mit einer äußeren Ringnut (16) ist.

## Revendications

1. Système destiné en particulier à une utilisation orthodontique, comprenant une vis intra-osseuse (1) pour un ancrage extradentaire, des moyens (3) permettant le couplage à la vis intra-osseuse (1) d'un fil métallique (2) faisant saillie depuis la muqueuse buccale et le fil métallique (2), lesdits moyens (3) permettant le couplage du fil métallique (2) à la vis (1) étant adaptés à permettre la rotation libre mais pas le glissement axial du fil (2) relativement à la vis (1), afin d'empêcher la transmission à la vis (1) de couples qui risquent de gêner le processus de cicatrisation de la gencive en autorisant en même temps la transmission d'autres forces quels que soient l'orientation et le décalage axial de celles-ci, la tête de la vis (1) étant traversée axialement par un orifice borgne (8, 9) **caractérisé en ce que** ledit fil (2) comporte une partie montée de façon à pouvoir tourner librement dans l'orifice axial (11) d'une broche conique (10) adaptée à être forcée dans l'orifice (8, 9) de la vis (1), ledit fil (2) ayant un bout plus large (12a, 12b, 13) qui fait saillie depuis ledit orifice axial (11) de l'extrémité convergente de ladite broche (10), une partie du fil (2) faisant saillie depuis l'extrémité divergente de ladite broche (10) étant conçue de façon à faire partie d'un point d'ancrage ou de former le point d'ancrage d'éléments orthodontiques ou prothétiques.

2. Système suivant la revendication 1, **caractérisé en ce que** le diamètre dudit fil (2) est essentiellement identique au diamètre de l'orifice (11) de la broche conique (10) et **en ce que** le bout plus large consiste en une sorte de tête (12a) prévue à l'extrémité du fil (2).

3. Système suivant la revendication 1, **caractérisé en ce que** le diamètre dudit orifice axial (11) de la broche conique (10) est légèrement supérieur à deux fois le diamètre du fil (2) et **en ce que** l'extrémité du fil (2) est courbée de façon à former une boucle (12b) qui constitue ledit bout plus large.

4. Système suivant la revendication 1, **caractérisé en ce que** le diamètre dudit orifice axial (11) de la broche conique (10) est légèrement supérieur à deux fois le diamètre du fil (2) et **en ce que** ledit fil (2) est essentiellement courbé en forme de U avec les branches mutuellement fermées (2b, 2c) formant une boucle (13) qui fait saillie de l'extrémité convergente de la broche (10).

5. Système suivant une ou plusieurs des revendications précédentes, **caractérisé en ce que** ledit fil (2) est réalisé en un alliage métallique élastique et **en ce que**, lorsque son élasticité est activée, son extrémité libre (2a) ou ses extrémités (2b, 2c) peuvent transmettre des forces qui sont parallèles à l'axe principal de la vis (1) et qui présentent une orientation intrusive ou extrusive relativement à la gencive.

6. Système suivant une ou plusieurs des revendications précédentes, **caractérisé en ce que** la partie de la broche (10) qui fait saillie depuis la vis (1) est sphéroidale (17) ou cylindrique (14) ou cylindrique (15) avec une rainure périmétrique extérieure (16).
